Europäisches Patentamt

European Patent Office

Office européen des brevets

(11) Veröffentlichungsnummer: **0 178 393**
A2

(12) **EUROPÄISCHE PATENTANMELDUNG**

(21) Anmeldenummer: 85109141.3

(22) Anmeldetag: 22.07.85

(51) Int. Cl.⁴: **H 04 M 1/72**
**H 04 M 1/02**

(30) Priorität: 06.10.84 DE 3436696

(43) Veröffentlichungstag der Anmeldung:
23.04.86 Patentblatt 86/17

(84) Benannte Vertragsstaaten:
AT CH DE IT LI SE

(71) Anmelder: ROBERT BOSCH GMBH
Postfach 50
D-7000 Stuttgart 1(DE)

(72) Erfinder: Gorzel, Heribert, Dipl.-Ing.
Forstweg 33 c
D-1000 Berlin 28(DE)

(72) Erfinder: Schulz, Hans-Joachim, Dipl.-Ing.
Pfeddersheimer Weg 50
D-1000 Berlin 38(DE)

(74) Vertreter: Schmidt, Hans-Ekhardt
Robert Bosch GmbH Geschäftsbereich Elektronik Patent-
und Lizenzabteilung Forckenbeckstrasse 9-13
D-1000 Berlin 33(DE)

(54) **Fertigungsverfahren für aus einem Basisteil und einem oder mehreren lösbar damit verbundenen Geräteteilen bestehende elektrische Geräte.**

(57) Es wird ein Fertigungsverfahren vorgeschlagen, bei dem ein aus Basisteil und individuell zugeordneten Geräteteilen bestehendes elektrisches Gerät vor der Auslieferung gekennzeichnet wird. Basisteile und Geräteteile werden zunächst getrennt gefertigt, wobei in einem Speicher (17) des Basisteils (10) die individuellen Daten eines Gerätes gespeichert werden. Mit dem erstmaligen Verbinden von Basisteil und individuell zugehörigen Geräteteilen (11) werden die Daten automatisch abgerufen und in einen Speicher (29) der Geräteteile eingeschrieben. Individuelle Daten sind zum Beispiel die Gerätenummer, Geräteoptionen und dergleichen.

Fig. 4

EP 0 178 393 A2

31/84
EK/PLI Scht-Li
17.7.1985


ROBERT BOSCH GMBH, 7000 Stuttgart 1

.

**Fertigungsverfahren für aus einem Basisteil und einem oder mehreren lösbar damit verbundenen Geräteteilen bestehende elektrische Geräte**

Stand der Technik

Die Erfindung geht von einem Fertigungsverfahren nach der Gattung des Anspruchs 1 aus.

Es sind schnurlose Telefone bekannt (Unterhaltungs-Elektronik, 1984, Nr. 1, Seite 37), bei denen das Gehäuse einer an eine Fernsprechteilnehmerleitung angeschlossenen Basisstation einen Sender und Empfänger, einen elektronischen Rechner sowie eine Vertiefung zur Ablage eines Handapparates aufweist. Der Handapparat enthält neben einem Hörer und einem Mikrofon eine Tastenwahleinheit, eine Stromversorgung und ebenfalls einen Sender und Empfänger sowie einen elektronischen Rechner, zu dem ein Speicher gehört. In der Vertiefung der Basisstation sind elektrische Kontakte angebracht, die bei aufgelegtem Handapparat mit entsprechenden Gegenkontakten des Handapparates in Eingriff gelangen. Zu einer bestimmten Basisstation gehört immer ein bestimmter Handapparat, so daß vor der Auslieferung eines kompletten schnurlosen Telefons eine durch den Benutzer normalerweise nicht mehr veränderbare, für Basisteil und Handapparat gleichermaßen geltende individuelle Kennzeichnung vorgesehen werden muß. Die Kennzeichnung umfaßt individuelle Daten des schnurlosen Telefons, wie zum Beispiel die Gerätenummer, optionale Merkmale und dergleichen.

...

## Vorteile der Erfindung

Das erfindungsgemäße Fertigungsverfahren mit den kennzeichnenden Merkmalen des Anspruchs 1 hat den Vorteil, daß Basisteile und Geräteteile getrennt hergestellt werden können und daß die Kennzeichnung eines kompletten elektrischen Gerätes automatisch beim erstmaligen Verbinden der Geräteteile mit dem Basisteil erfolgt, ohne daß es zusätzlicher Handgriffe oder bestimmter Werkzeuge bedarf.

Durch die in den Unteransprüchen aufgeführten Maßnahmen sind vorteilhafte Weiterbildungen und Verbesserungen des im Anspruch 1 angegebenen Fertigungsverfahrens möglich. Besonders vorteilhaft ist ein Fertigungsverfahren, bei dem ein Signalelement der Geräteteile das ordnungsgemäße Einschreiben der individuellen Daten in den Speicher anzeigt. Dadurch erhält beispielsweise diejenige Person, die das komplette elektrische Gerät verpacken will, eine sichere Anzeige darüber, daß die individuellen Daten des Gerätes ordnungsgemäß in dem Speicher der Geräteteile eingespeichert worden sind.

## Zeichnung

Ein Ausführungsbeispiel der Erfindung wird in der Zeichnung anhand mehrerer Figuren dargestellt und in der nachfolgenden Beschreibung näher erläutert. Die Zeichnung zeigt in

Fig. 1  eine Seitenansicht eines erfindungsgemäßen Basisteils
        in Form einer Basisstation eines schnurlosen Telefons,

Fig. 2  eine Seitenansicht eines erfindungsgemäßen Geräteteils
        in Form eines Handapparates für das schnurlose Telefon,

Fig. 3  eine Ansicht von Basisstation und darauf abgelegtem
        Handapparat nach den Figuren 1 und 2,

Fig. 4  ein Blockschaltbild der Elektronikteile von Basisstation und Handapparat und

Fig. 5  ein den Fertigungsablauf symbolisierendes Schema.

...

## Beschreibung der Erfindung

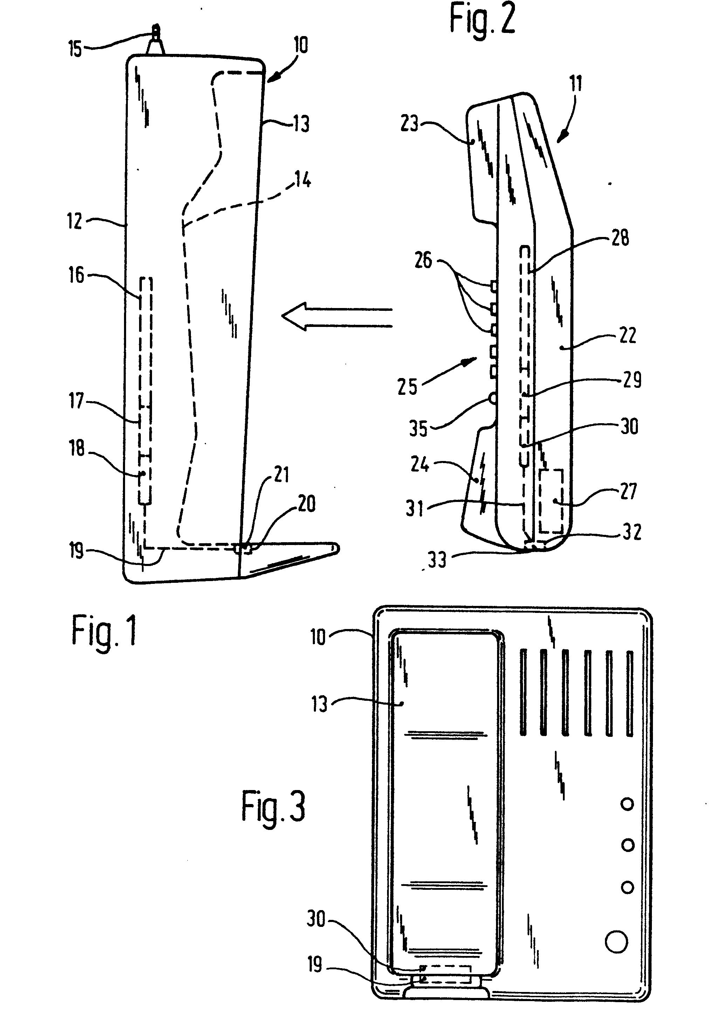

Ein durch das erfindungsgemäße Verfahren herzustellendes elektrisches Gerät ist zum Beispiel ein schnurloses Telefon, das gemäß Fig. 1 eine Basisstation 10 und einen Handapparat 11 aufweist. Das etwa quaderförmige Gehäuse 12 der Basisstation enthält auf seiner Frontseite 13 unter anderem eine Vertiefung 14 zur Ablage des Handapparates 11. An einer Stirnseite weist das Gehäuse eine Teilnehmeranschlußleitung 15 auf, die zu einem Fernsprechapparat führt. In dem Gehäuse 12 befindet sich ein mit der Leitung 15 verbundener Elektronikteil 16 mit einem elektronischen Speicher 17 und einem damit verbundenen elektronischen Rechner 18, der über Leitungen 19 mit einer Kontaktanordnung 20 an der Innenseite der Vertiefung 14 in Verbindung steht. Zu der Kontaktanordnung 20 gehört ein Daten-Kontakt 21; vgl. Fig. 1.

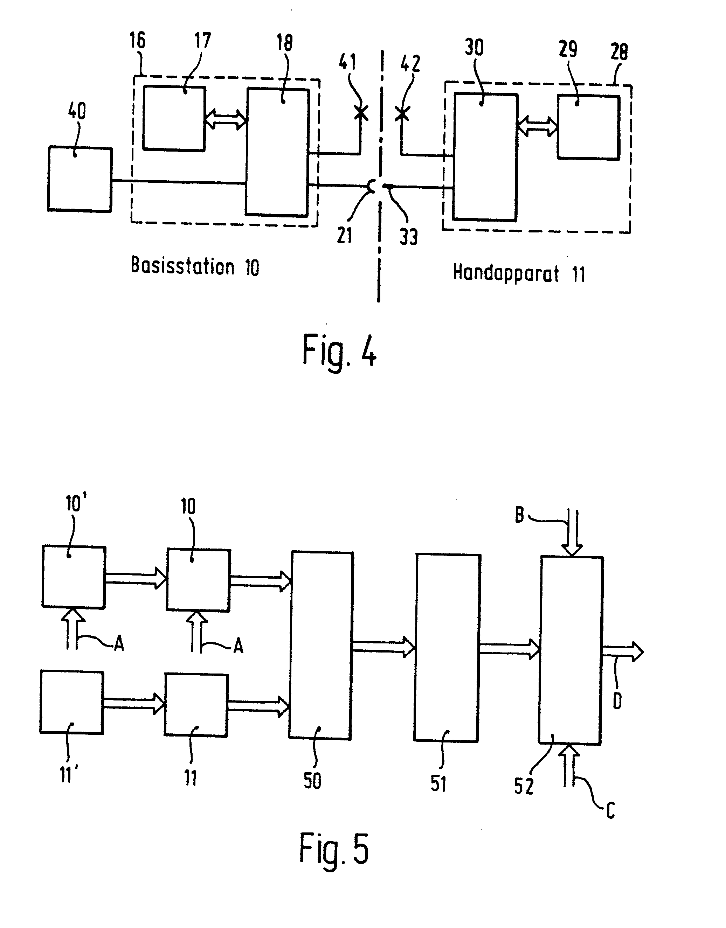

Ein Gehäuse 22 des Handapparates 11 weist auf der Innenseite zwischen einer Hörmuschel 23 und einer Sprechmuschel 24 eine Tastatur 25 mit Drucktasten 26 und in seinem Innern eine Stromquelle 27, einen Elektronikteil 28 mit einem elektronischen Speicher 29 und einem elektronischen Rechner 30 auf, der über Leitungen 31 mit einer Gegenkontaktanordnung 32 in Verbindung steht. Zu der Gegenkontaktanordnung 32 des Handapparates 11 gehört ein Daten-Gegenkontakt 33; vgl. Fig. 2. Ein akustisches oder optisches Anzeigeelement 35, das ist zum Beispiel eine Leuchtdiode, befindet sich beispielsweise zwischen der Tastatur 25 und der Sprechmuschel 24. In Fig. 4 ist anhand eines stark vereinfachten Blockschaltbildes der Aufbau der Elektronikteile 16, 28 von Basisstation 10 und Handapparat 11 gezeigt. Der Elektronikteil 16 enthält einen ersten Rechner 18, der mit einem Speicher 17 wechselseitig verbunden ist und der diesen steuert. Der erste Rechner ist bei in Betrieb befindlichem Teilnehmeranschluß mit einem Fernsprechapparat 40 verbunden. Die Basisstation 10 weist noch eine Sende- und Empfangsantenne 41 auf, über die die Hochfrequenzsignale von und zu einer Sende- und Empfangsantenne 42 des Handapparates 11 geführt werden. Zu dem Elektronikteil 28 des Handapparates gehört ein zweiter Rechner 30, der mit einem Speicher 29 wechselseitig verbunden ist. Zwischen Basisstation 10 und Handapparat 11 besteht eine galvanische Verbindung über das Kontaktpaar 21, 33; vgl. Fig. 1, 3 und 4.

...

Während der Speicher 17 der Basisstation 10 nur ein Festwertspeicher zu sein braucht, muß der Speicher 29 des Handapparates 11 ein Speicher sein, in welchem die eingeschriebenen Daten auch bei Stromausfall, zum Beispiel infolge eines Auswechselns der Stromquelle 27, gespeichert bleiben. Hierfür eignet sich vorzugsweise ein EEPROM-Speicher.

Der erfindungsgemäße Fertigungsablauf von schnurlosen Telefonen ist vorzugsweise folgender; vgl. auch Fig. 5.

Basisstationen 10, 10' und Handapparate 11, 11' werden auf getrennten Fertigungswegen hergestellt. Dabei werden in den Speicher einer jeden Basisstation 10, 10' die individuellen Daten der später zu komplettierenden schnurlosen Telefone eingeschrieben; vgl. Pfeil A. An einem Arbeitsplatz 50, an dem jeweils eine Basisstation und ein Handapparat zu einem schnurlosen Telefon komplettiert werden, wird zunächst durch eine dauernd blinkende Anzeige, vorzugsweise durch das Anzeigeelement 35, darauf aufmerksam gemacht, daß der Handapparat 11 auf die Basisstation 10 aufzulegen ist bzw. daß sich der Handapparat nicht in seiner ordnungsgemäßen Lage in der Vertiefung 14 der Basisstation befindet. Ist der Handapparat ordnungsgemäß abgelegt worden, so daß die individuellen Daten der Basisstation über das Datenkontaktpaar 21, 33 in den Speicher des Handapparates eingeschrieben worden sind, dann leuchtet das Anzeigeelement zur Bestätigung dauernd auf. Das Prüfen, ob die Daten einwandfrei von dem Handapparat empfangen worden sind, erfolgt vorzugsweise dadurch, daß für die Übertragung der individuellen Daten ein Fehlersicherungskode angewendet wird, den der Elektronikteil 28 des Handapparates auswertet. Damit wird sichergestellt, daß der Speicher 29 des Handapparates nur ungestörte bzw. unverfälschte individuelle Daten aufnimmt. Anschließend erfolgt an einem weiteren Arbeitsplatz 51 eine Funktionsendkontrolle des kompletten schnurlosen Telefons. Erweist sich das geprüfte schnurlose Telefon als einwandfrei, dann wird dieses an einem Arbeitsplatz 52 in der üblichen Weise verpackt, wozu Verpackungsmaterial (vgl. Pfeil B) und Druckschriften (vgl. Pfeil C), wie zum Beispiel eine Bedienungsanleitung, eine Garantiekarte und dergleichen, bereitgestellt werden müssen. Das fertig eingepackte schnurlose Telefon (vgl. Pfeil D) verläßt dann den Arbeitsplatz 52.

...

Die nur als Ausführungsbeispiel genannten Arbeitplätze 50, 51, 52 kann
der Fachmann bei Bedarf anders organisieren, wobei jedoch der prinzipielle Fertigungsablauf erhalten bleibt.

Damit nicht ein mit individuellen Daten bereits versehener Handapparat
beim versehentlichen Ablegen auf einer anderen Basisstation neue individuelle Daten erhält, wird beim erstmaligen Auflegen des Handapparates 11
auf einer Basisstation eine zusätzliche Information in dem Speicher 29
des Handapparates gespeichert. Wenn jetzt ein bereits individuelle Daten
enthaltender Handapparat auf einer anderen Basisstation abgelegt wird,
dann erkennt die Basisstation die zusätzliche Information und zeigt das
Nichtzusammengehören von Basisstation und Handapparat auf eine an sich
bekannte Art und Weise an.

31/84
EK/PLI Scht-Li
17.7.1985


ROBERT BOSCH GMBH, 7000 Stuttgart 1


Ansprüche


1. Fertigungsverfahren für aus einem Basisteil und einem oder mehreren
   lösbar damit verbundenen Geräteteilen bestehende elektrische Geräte,
   wobei zu jedem Basisteil bestimmte individuelle Merkmale aufweisende
   Geräteteile gehören, dadurch gekennzeichnet, daß Basisteile (10) und
   Geräteteile (11) unabhängig voneinander hergestellt werden, wobei in
   dem Basisteil die individuellen Daten, wie zum Beispiel die Gerätenummer, eines jeden elektrischen Gerätes elektronisch gespeichert
   werden, und daß spätestens bei der Endprüfung des Gerätes die zu
   einem elektrischen Gerät gehörenden Geräteteile (11) mit dem Basisteil verbunden werden, wobei die individuellen Daten des Basisteils
   automatisch abgerufen und in elektronische Speicher (29) der betreffenden Geräteteile eingeschrieben werden.


2. Fertigungsverfahren nach Anspruch 1, dadurch gekennzeichnet, daß die
   Übertragung der individuellen Daten von dem Basisteil (10) auf die
   zugehörigen Geräteteile (11) mittels eines Fehlersicherungskodes erfolgt.


3. Fertigungsverfahren nach Anspruch 1 oder 2, dadurch gekennzeichnet,
   daß gleichzeitig mit dem Einspeichern der individuellen Daten eine
   zusätzliche Information in den Speicher (29) der Geräteteile (11)
   eingeschrieben wird, die ein unbeabsichtigtes oder unbefugtes Verändern der in dem Speicher (29) eingeschriebenen individuellen Daten
   beim Verbinden der Geräteteile mit einem anderen, nicht zugehörigen
   Basisteil verhindert.


                                                                    ...

4. Nach einem Fertigungsverfahren nach Anspruch 1 oder 3 hergestelltes elektrisches Gerät, dadurch gekennzeichnet, daß der Speicher (29) der Geräteteile (11) ein EEPROM-Speicher ist.

5. Fertigungsverfahren nach Anspruch 1, 2 oder 3, dadurch gekennzeichnet, daß ein Signalelement (35) der Geräteteile (11) das ordnungsgemäße Einschreiben der individuellen Daten in den Speicher (29) anzeigt.

6. Nach einem Fertigungsverfahren gemäß Anspruch 5 hergestelltes elektrisches Gerät, dadurch gekennzeichnet, daß das Signalelement ein akustisches und/oder optisches Anzeigeelement (35) ist.

7. Nach einem Fertigungsverfahren gemäß den Ansprüchen 1 bis 3 oder 5 hergestelltes schnurloses Telefon, dadurch gekennzeichnet, daß das Basisteil (10) mit einer Kontaktanordnung (20) und der Handapparat (11) mit einer entsprechenden Gegenkontaktanordnung (32) ausgerüstet ist, die bei auf dem Basisteil aufgelegtem Handapparat mit der Kontaktanordnung in Eingriff kommt, und daß ein Kontaktpaar (21, 33) von Kontakt- und Gegenkontaktanordnung (30, 32) zur galvanischen Übertragung der individuellen Daten vorgesehen ist.

1 / 2    0178393

Fig. 1

Fig. 2

Fig. 3

Fig. 4

Fig. 5